Europäisches Patentamt

European Patent Office

Office européen des brevets

(11) Publication number: **0 262 070**
**B1**

# EUROPEAN PATENT SPECIFICATION

(45) Date of publication of the patent specification:
**04.07.90**

(51) Int. Cl.⁵: **H01M 2/12**, B65D 83/14,
F16K 17/16, H01G 9/12

(21) Application number: **87630146.6**

(22) Date of filing: **11.08.87**

(54) Modified safety vented cover for sealed container and method of manufacturing same.

(30) Priority: **19.09.86 US 909302**

(43) Date of publication of application:
**30.03.88 Bulletin 88/13**

(45) Publication of the grant of the patent:
**04.07.90 Bulletin 90/27**

(84) Designated Contracting States:
**AT CH DE ES FR GB IT LI NL**

(56) References cited:
**FR-A- 2 179 144**
**US-A- 3 195 769**
**US-A- 4 122 595**

(73) Proprietor: **EMERSON ELECTRIC CO., 8100 W.**
**Florissant Avenue, St. Louis Missouri 63136(US)**

(72) Inventor: **Burrows, Larry Gene, 7075 Olentangy Lane,**
**Cincinnati Ohio 45244(US)**
Inventor: **Wilson, Edward Eugene, 5757 E. Tall Oaks**
**Drive, Milford Ohio 45150(US)**

(74) Representative: **Schmitz, Jean-Marie et al, OFFICE**
**DENNEMEYER S.à.r.l. P.O. Box 1502,**
**L-1015 Luxembourg(LU)**

## Description

The present invention relates to sealed container covers and, more particularly, to a method of making safety vents in covers for hermetically sealed containers and a novel cover for such a container including a safety vent membrane.

It is generally well known to provide hermetically sealed containers with a rupturable safety vent membrane in the container body so that if gas pressures develop within the container beyond a predetermined limit, the membrane ruptures to permit release of gas, avoiding uncontrollable container explosion or disintegration and possible personal and property damages occasionally associated therewith. Several such arrangements as taught by the prior art include: a pressure frangible safety device as disclosed in U.S. Patent No. 3 617 386 issued to Robert J. Bosben on November 2, 1971; a reduced area of container wall thickness designed to rupture in response to predetermined circumferential stresses occurring within the container, as disclosed in U.S. Patent No. 4 175 166, issued to M.G. Rosansky on November 20, 1979; a cruciform shaped incision in a sealed container of V-shaped cross-section as disclosed in U.S. Patent No. 4 256 812, issued to K. Tamura, et al, on March 17, 1981; and, pressure relief safety membranes as disclosed in U.S. Patent No. 4 476 200, issued to C. Markin, et al, on October 9, 1984. The formation of such safety vents in the past has generally been accomplished by mechanical means such as by the single step of stamping. Such past forming means have caused stress corrosion and non-uniformity in metal thickness and metal gain structure which, in turn, has resulted in non-uniform pressure sensitivity and limited pressure responsively characteristics because of stress corrosion, metal crystallization and work hardening problems.

The present invention recognizing the importance of such uniformity in thin safety membranes in potentially explosive sealed containers and further recognizing the importance of carefully controlling the dimension and pressure sensitive characteristics of such membranes so as to be uniformly responsive to predetermined low pressures provides a unique and novel method of manufacturing safety vent membranes in covers for hermetically sealed containers in an efficient, straightforward and economical manner to permit mass production of a novel and inventive product without sacrifice of desired very low critical pressure responsive uniformity and without excessive metal crystallization and work hardening that would occur through stamping alone.

Although the broad use of producing tearing lines in containers by etching is old, as disclosed in U.S. Patent No. 3,723,269, issued to E. Hofling on March 27, 1973, the present invention, recognizing the desirability and importance of uniformity in low pressure sensitivity and low pressure responsiveness of safety vent membranes for sealed containers without excessive work hardening and crystallization of material provides a new and novel method and a unique product which affords such low pressure sensitivity and responsiveness in a manner previously unknown in the art.

Various other features of the present invention will become obvious to one skilled in the art upon reading the disclosure set forth herein.

More particularly, the present invention provides a method of making a safety vent in a cover for a hermetically sealed container comprising: feeding a container cover blank into a first groove forming zone to etch a first grooved area therein of a uniform preselected remaining material thickness capable of withstanding a first preselected mean pressure; and, feeding the etched cover blank into a second groove forming zone to pressure form a second grooved area within the etched groove area of uniform preselected remaining material thickness capable of withstanding a second preselected mean pressure below the mean pressure limitation of the etched grooved area. In addition, the present invention provides a cover for a hermetically sealed container, the cover having a first grooved area etched therein to extend in spaced relation with the surrounding peripheral edge thereof with a preselected remaining material thickness and breadth to provide a first safety vent membrane capable of withstanding a first preselected mean pressure before rupturing; and a second grooved area formed in the etched grooved area to provide a safety vent groove capable of uniformly responding to and withstanding a preselected mean pressure lower than the first preselected mean pressure before rupturing.

It is to be understood that various changes can be made by one skilled in the art in the several steps of the method and in the several parts of the product disclosed herein without departing from the scope of the present invention. For example, the etching step, the pressure forming step, the container cover material, the rupture limits and geometry of the safety vent, all can be changed by one skilled in the art to obtain desired results without departing from the disclosure herein.

Referring to the drawing which discloses one advantageous embodiment of the present invention:

Figure 1 is a flow diagram setting forth schematically the several steps involved in carrying out the inventive process;

Figure 2 is an enlarged plan view of a portion of a strip of material which has been subjected to the inventive process of Figure 1;

Figure 3 is a further enlarged cross-sectional view of the material of Figure 2 taken in a plane passing through line 3–3 of Figure 2; and,

Figure 4 is a perspective view of an inventive cover for a hermetically sealed container, further disclosing a central aperture therein.

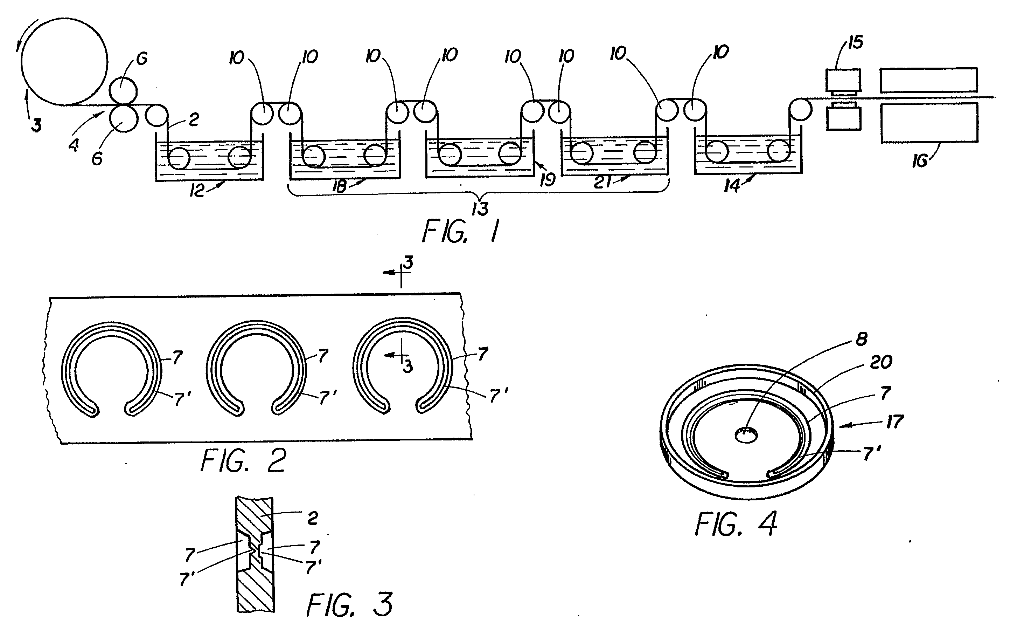

Referring to Figure 1 of the drawing, a strip 2 of material is fed from a supply zone 3 where it can be stored in the form of a coil to a printing zone 4. The strip 2 of coiled material can be any one of a number of known materials used in the manufacture of covers for hermetically sealed containers, which is responsive to the hereinafter described controlled etching and press forming process and, in the manufacture of battery covers such as those utilized for hermetically sealed batteries of the button type, a suitable metallic alloy such as cold rolled alloyed carbon steel for example "C1010") having a thickness in the range of 0.20 to 1.52 mm (0.008 to 0.06 inches) and, advantageously, approximately 0.25 ± 0.025 mm (0.010 inches plus or minus 0.001 inches) can be used. It is to be understood that prior to carrying out the etching and press forming process, an appropriate cleaning and degreasing of the metallic alloy can be accomplished in a satisfactory cleansing and degreasing bath (not shown).

In the event a metallic steel alloy strip is used, as in the example hereinafter described, a suitable bath using a caustic cleansing agent would suffice.

In printing zone 4, opposed printing rolls 6, frequently or continuously treated with a suitable masking resist agent or etching ground which can be selected from appropriate chemical materials in accordance with the material to be etched and the subsequent chemicals to be used in the etching process, mask all surfaces of the strip of material not to be etched with an appropriate etching resist coating, for example, a synthetic resin capable of resisting the particular etching step to be employed.

The unmasked portion of the strip of material to which no resist coating has been applied in printing zone 4 by rolls 6 can be in any one of several geometric pattern forms in accordance with the present invention. In the embodiment of Figures 2 and 3, the geometric pattern includes spaced uncovered channel areas in the form of circular arcs 7 of less than 360 degrees and of preselected breadth, with a portion of each otherwise complete circle being masked to provide a retention portion. In the embodiment of Figures 2–4, each of the circular or horse-shoe shaped arcs 7 surrounds an uncovered hole defining central area 8, the arcs 7 being on opposite surfaces of material strips 2 in opposed mirror image relationship, as described in detail in EP-A 0 217 725 and as can be noted in the cross-sectional view of Figure 3. It of course is to be understood that the present invention can be adapted to other configurations, such as, but not limited to, those which are set forth more fully in the parent application.

In accordance with the inventive process and again referring to Figure 1, after strip 2 has been suitably masked with a resist coating in the manner above discussed, strip 2 is fed along spaced idle rollers 10 through an etching zone 12, to etch the first grooved areas 7 thereon of uniform preselected remaining material thickness and breadth capable of withstanding a first preselected mean pressure, a rinsing zone 13, a lubricating zone 14, then into a press forming zone, such as coining zone 15 where second grooves 7' are press formed or are formed by working the material into plastic flow within etched grooves 7, the grooves 7' being of preselected remaining material thickness and breadth capable of withstanding a preselected mean pressure below the mean pressure limitation of grooves 7. It is to be noted that grooves 7' can be formed in any one of a number of cross-sectional shapes and in Figure 3, the grooves 7 are shown in "V"-cross-section on one side of strip 2 and of truncated cross-section on the other side of the strip. Once grooves 7 have been properly formed with grooves 7' in zone 15, strip 2 is fed to a further stamping or forming zone 16 where individual container covers 17, such as disclosed in Figure 4, are formed. It is to be understood that strip 2, after passing through rinsing zone 13, could be again coiled for subsequent treatment elsewhere. It, also, is to be noted that various types of rims 20 can be formed on covers 17 or rims can be eliminated, if so desired.

In passing through zones 12, 13 and 14, strip 2 is fed along suitable idle rollers 10, as above noted.

In etching zone 12, strip 2 can be fed through a suitable acid etching bath, such as ferric chloride if the material to be etched is a steel alloy. The density and temperature of the etching bath and even the number of baths can be controlled to avoid gas bubbling. Also, such parameters as the rate of feed or residence time of the strip within the bath or baths, the acidity concentrations of the bath and bath temperatures are all carefully controlled so that the etching depth and thus the thickness of the material is carefully predetermined and maintained uniform along the unmasked surfaces. For example, when a steel alloy in the range of 0.20 to 1.52 mm (0.008 to 0.06 inches) thickness and advantageously of 0.25 mm (0.010 inches) is used, the etching of the first grooves 7 is controlled to provide a uniform remaining material thickness in the range of 0.06 to 0.089 mm (0.0025 to 0.0035) and advantageously 0.076 mm (0.003 inches). The press forming of said second grooves 7' is controlled to provide a uniform remaining material thickness within grooves 7 in the range of approximately 0.012 to 0.05 mm (0.0005 to 0.002 inches). It is to be understood that advantageously, when battery covers for hermetically sealed containers are being processed, the depth of etching of said first grooved area is so controlled as to leave a preselected remaining material of thickness capable of withstanding a preselected pressure up to 3.45 MPa (500 pounds per square inch) within the sealed containers of which such covers form a part. Forming the second grooved area within the first groove is so controlled to leave second safety groove within the first membranes so as to be capable of uniformly responding to and withstanding a preselected pressure in a range up to 2.75 MPa (400 pounds per square inch).

As previously described, once strip 2 has been properly etched in etching zone 12, it is then fed through rinsing zone 13. In the inventive embodiment of Figure 1, rinsing zone 13 can include three stages, namely, a neutralizing stage 18, a resist stripping stage 19 and a washing stage 21. The neutralizing stage 18 can include a bath of suitable caustic or alkaline solution such as sodium hydroxide. The stripping stage can include an appropriate acidic bath depending upon the chemistry of the mask resist coating applied to printing rolls 6 in printing zone 4 and the washing stage 21 can be a plain tap water bath. From the last stage of rinsing zone 13, strip 2 can be fed to a suitable oil lubricating zone 14 before it is fed into press forming zone, such as coining zone 15 and then to an overall stamping zone 16 to form covers 17 from strip 2. As in etching zone 12, the residence times and bath concentrations in the rinsing zone 13, stages 18, 19 and 21 can be controlled in accordance with the results desired.

As aforenoted, it is to be understood that various changes can be made in the several steps of the method and product disclosed without departing from the invention. For example, other covers besides those for hermetically sealed containers can be so manufactured and other container materials besides steel alloys can be used in the inventive process and the etching and press forming treatments and channel geometries can be varied to provide safety membranes which will accommodate other predetermined pressures for containers.

## Claims

1. A method of making a safety vent in a cover for a hermetically sealed container comprising:
    feeding a container cover blank into a first groove forming zone 4, 12, 13 to etch a first grooved area (7) of uniform preselected remaining material thickness capable of withstanding a first preselected mean pressure; and,
    feeding said etched cover blank into a second groove forming zone (15) to pressure form a second grooved area (7') within said first etched grooved area (7) of uniform preselected remaining material thickness capable of withstanding a second preselected mean pressure below the mean pressure limitation of said etched first grooved area.

2. The method of claim 1, wherein said second grooved area (7') is press formed by a coining step.

3. The method of claim 1, wherein said first grooved area (7) is formed by a series of etching steps including mask printing a preselected resist pattern with an uncovered area corresponding to said first grooved area (7) and control etching said uncovered area to uniform preselected breadth and remaining material thickness.

4. The method of claim 1, wherein said first grooved area (7) and said second grooved area (7') therein are formed in said cover to be on the outer side of said container.

5. The method of claim 1, the forming of said first grooved area (7) including forming mirror image grooves on both faces of said cover blank.

6. The method of claim 1, wherein said first grooved area (7) and said second grooved area (7') therein are formed in said cover to be on the inner side of said container.

7. The method of claim 1, said container cover blank comprising a steel alloy in the range of approximately 0.20 to 1.52 mm (0.008 to 0.06 inches) thickness with the formation of said first grooved area (7) being controlled to provide a uniform remaining material thickness in the range of approximately 0.06 to 0.089 mm (0.0025 to 0.0035 inches) and the formation of said second grooved area (7') being controlled to provide a uniform remaining material thickness in said first grooved area (7) in the range of approximately 0.012 to 0.05 mm (0.0005 to 0.002 inches).

8. A method of making a safety vent in a cover for a hermetically sealed container comprising:
    feeding a container cover blank of steel alloy material in the range of approximately 0.20 to 1.52 mm (0.008 to 0.06 inches) thickness into a first groove forming zone (4, 12, 13) including a printing subzone (4), an etching subzone (12) and a rinsing subzone (13);
    printing said container cover blank while in said printing subzone (4) on both surfaces therein with a masking resist pattern having an uncovered channel area to correspond to a safety vent membrane area;
    feeding said masked printed container cover blank to said otching subzone (12);
    subjecting said container cover blank while in said etching zone (12) to a controlled etching process to etch said uncovered channel area on both surfaces to form a first grooved area (7) and to leave a uniform preselected remaining material thickness in the range of approximately 0.06 to 0.089 mm (0.0025 to 0.0035 inches) which serves as a first safety vent membrane in said cover capable of withstanding a first preselected mean pressure before rupturing;
    feeding said etched grooved cover through said rinsing subzone (13) to remove said resist and etching materials;
    feeding said grooved cover blank into a second groove forming zone (15); and,
    coining said etched area on both surfaces of said cover of said container to form a second grooved area (7') in said first grooved area (7) providing a uniform remaining material thickness in said first grooved area (7) in the range of approximately 0.012 to 0.05 mm (0.0005 to 0.002 inches).

9. A cover (17) for a hermetically sealed container having a first grooved area etched therein to extend in spaced relation from the surrounding peripheral edge thereof with a preselected remaining material thickness to provide a first safety vent membrane capable of withstanding a first preselected mean pressure before rupturing; and,
    a second grooved area (7') pressure formed in said etched grooved area (7) with a preselected remaining material thickness to provide a safety vent membrane capable of uniformly responding to and withstanding a second preselected mean pressure lower than said first preselected mean pressure before rupturing.

10. The container cover of claim 9, said first grooved area (7) being chemically etched in said cover in mirror image relation on both surfaces thereof.

11. The container cover of claim 9, said second grooved area (7') within said first grooved area (7) being coined therein on both surfaces of said cover.

12. The container cover of claim 9, said container cover being a steel alloy in the range of approximately 0.20 to 1.52 mm (0.008 to 0.06 inches) thickness with said first safety vent membrane having a uniform remaining material thickness in the range of approximately 0.06 to 0.089 mm (0.0025 to 0.0035 inches) and said second safety vent membrane having a uniform remaining material thickness in the range of approximately 0.012 to 0.05 mm (0.0005 to 0.002 inches).

13. A circular steel alloy battery cover for a hermetically sealed lithium battery container, said cover having a thickness in the range of approximately 0.20 to 1.52 mm (0.008 to 0.06 inches) and having opposed chemically etched grooves (7) therein in the form of mirror image circular arcs of less than 360°C spaced from the peripheral edge of said cover to provide a first safety membrane of uniform preselected remaining material thickness in the range of approximately 0.06 to 0.089 mm (0.0025 to 0.0035 inches) capable of uniformly responding to and withstanding a first preselected mean pressure in the range of up to 3.45 MPa (500 pounds per square inch) before rupture, said arcs surrounding an aperture therein sized to receive an eyelet and terminal pin assembly to be fused therein; and, a coin punched groove (7') in said etched mirror image arc on both surfaces of said cover of the container to provide a second safety vent membrane within said first safety vent membrane having a uniform remaining material thickness of approximately 0.012 to 0.05 mm (0.0005 to 0.002 inches) capable of uniformly responding to and withstanding a preselect mean pressure in a range approximately up to 2.75 MPa (400 pounds per square inch) before rupture.

## Patentansprüche

1. Verfahren zum Herstellen einer Sicherheitsentlüftung in einem Deckel für einen hermetisch verschlossenen Behälter durch:
Fördern eines Behälterdeckelzuschnitts in eine erste Nutbildungszone (4, 12, 13), um einen ersten genuteten Bereich (7) mit gleichförmiger vorgewählter Restmaterialdicke zu ätzen, der in der Lage ist, einen ersten vorgewählten mittleren Druck auszuhalten; und
Fördern des geätzten Deckelzuschnitts in eine zweite Nutbildungszone (15), um einen zweiten genuteten Bereich (7') innerhalb des ersten geätzten genuteten Bereiches (7) mit gleichförmiger vorgewählter Restmaterialdicke zu bilden, der in der Lage ist, einen zweiten vorgewählten mittleren Druck auszuhalten, welcher unter dem Grenzwert des mittleren Druckes des geätzten ersten genuteten Bereiches liegt.

2. Verfahren nach Anspruch 1, wobei der zweite genutete Bereich (7') durch einen Prägeschritt preßgeformt wird.

3. Verfahren nach Anspruch 1, wobei der erste genutete Bereich (7) durch eine Reihe von Ätzschritten gebildet wird, die ein Maskierdrucken eines vorgewählten Abdecklackmusters, wobei ein unabgedeckter Bereich dem ersten genuteten Bereich (7) entspricht, und das Steuern des Ätzens des unabgedeckten Bereiches bis zu einer gleichförmigen vorgewählten Breite und Restmaterialdicke beinhalten.

4. Verfahren nach Anspruch 1, wobei der erste genutete Bereich (7) und der zweite genutete Bereich (7') darin in dem Deckel an der äußeren Seite des Behälters gebildet werden.

5. Verfahren nach Anspruch 1, bei dem das Formen des ersten genuteten Bereiches (7) das Formen von spiegelbildlichen Nuten auf beiden Seiten des Deckelzuschnitts beinhaltet.

6. Verfahren nach Anspruch 1, wobei der erste genutete Bereich (7) und der zweite genutete Bereich (7') darin in dem Deckel auf der inneren Seite des Behälters gebildet werden.

7. Verfahren nach Anspruch 1, wobei der Behälterdeckelzuschnitt eine Stahllegierung in dem Bereich von ungefähr 0,20 bis 1,52 mm (0,008 bis 0,06 Zoll) Dicke umfaßt, wobei die Bildung des ersten genuteten Bereiches (7) so gesteuert wird, daß sich eine gleichmäßige Restmaterialdicke in dem Bereich von ungefähr 0,06 bis 0,089 mm (0,0025 bis 0,0035 Zoll) ergibt, und wobei die Bildung des zweiten genuteten Bereiches (7') so gesteuert wird, daß sich eine gleichmäßige Restmaterialdicke in dem ersten genuteten Bereich (7) in dem Bereich von ungefähr 0, 012 bis 0,05 mm (0,0005 bis 0,002 Zoll) ergibt.

8. Verfahren zum Herstellen einer Sicherheitsentlüftung in einem Deckel für einen hermetisch verschlossenen Behälter durch:
Fördern eines Behälterdeckelzuschnitts aus Stahllegierungsmaterial in dem Bereich von ungefähr 0,20 bis 1,52 mm (0,008 bis 0,06 Zoll) Dicke in eine erste Nutbildungszone (4, 12, 13), welche eine Druckunterzone (4), eine Ätzunterzone (12) und eine Spülunterzone (13) umfaßt;
Bedrucken des Behälterdeckelzuschnitts, während er sich in der Druckunterzone (4) befindet, auf beiden Oberflächen mit einem Maskierabdecklackmuster, das einen unabgedeckten Kanalbereich hat, der einem Sicherheitsentlüftungsmembranbereich entspricht; Fördern des maskierten bedruckten Behälterdeckelzuschnitts in die Ätzunterzone (12);
Unterziehen des Behälterdeckelzuschnitts in der Ätzzone (12) einem gesteuerten Ätzprozeß, um den unabgedeckten Kanalbereich auf beiden Oberflächen zu ätzen und einen ersten genuteten Bereich (7) zu bilden sowie eine gleichmäßige vorgewählte Restmaterialdicke in dem Bereich von ungefähr 0,06 bis 0,089 mm (0,0025 bis 0,0035 Zoll) stehenzulassen, der als erste Sicherheitsentlüftungsmembran in dem Deckel dient, welche in der Lage ist, einen ersten vorgewählten mittleren Druck auszuhalten, bevor sie reißt;
Fördern des geätzten, genuteten Deckels durch die Spülunterzone (13), um die Abdecklack- und Ätzmaterialien zu entfernen;
Fördern des genuteten Deckelzuschnittes in eine zweite Nutbildungszone (15); und
Prägen des geätzten Bereiches auf beiden Oberflächen des Deckels des Behälters, um einen zweiten genuteten Bereich (7') in dem ersten genuteten Bereich (7) zu bilden, der eine gleichmäßige Restmaterialdicke in dem ersten genuteten Bereich (7) in dem Bereich von ungefähr 0,012 bis 0,05 mm (0,0005 bis 0,002 Zoll) ergibt.

9. Deckel (17) für einen hermetisch verschlossenen Behälter, der einen ersten genuteten Bereich (7) hat, welcher in ihm so geätzt ist, daß er sich mit Abstand von dem umgebenden Umfangsrand desselben erstreckt und eine vorgewählte Restmaterialdicke vorhanden ist, um eine erste Sicherheitsentlüftungsmembran zu schaffen, die in der Lage ist, einen ersten vorgewählten mittleren Druck auszuhalten, bevor sie reißt; und
einen zweiten genuteten Bereich (7'), der in dem geätzten genuteten Bereich (7) mit einer vorgewählten Restmaterialdicke preßgeformt ist, um eine Sicherheitsentlüftungsmembran zu schaffen, die in der Lage ist, auf einen zweiten vorgewählten mittleren Druck, der niedriger als der erste vorgewählte Druck ist, gleichmäßig anzusprechen und diesen auszuhalten, bevor sie reißt.

10. Behälterdeckel nach Anspruch 9, wobei der erste genutete Bereich (7) in dem Deckel spiegelbildlich auf beiden Oberflächen desselben chemisch geätzt ist.

11. Behälterdeckel nach Anspruch 9, wobei der zweite genutete Bereich (7') innerhalb des ersten genuteten Bereiches (7) darin auf beiden Oberflächen des Deckels geprägt ist.

12. Behälterdeckel nach Anspruch 9, wobei der Behälterdeckel eine Stahllegierung in dem Bereich von ungefähr 0, 20 bis 1, 52 mm (0,008 bis 0,06 Zoll) Dicke ist, wobei die erste Sicherheitsentlüftungsmembran eine gleichmäßige Restmaterialdicke in dem Bereich von ungefähr 0,06 bis 0,089 mm (0,0025 bis 0,0035 Zoll) hat und wobei die zweite Sicherheitsentlüftungsmembran eine gleichmäßige Restmaterialdicke in dem Bereich von ungefähr 0,012 bis 0,05 mm (0,0005 bis 0,002 Zoll) hat.

13. Kreisförmiger Stahllegierungsbatteriedeckel für einen hermetisch verschlossenen Lithiumbatteriebehälter, wobei der Deckel eine Dicke in dem Bereich von ungefähr 0,20 bis 1,52 mm (0,008 bis 0,06 Zoll) hat und entgegengesetzte, chemisch geätzte Nuten (7) darin in Form von spiegelbildlichen Kreisbögen von weniger als 360° mit Abstand von dem Umfangsrand des Deckels aufweist, um eine erste Sicherheitsmembran mit gleichmäßiger vorgewählter Restmaterialdicke in dem Bereich von ungefähr 0, 06 bis 0,089 mm (0,0025 bis 0,0035 Zoll) zu schaffen, die in der Lage ist, auf einen ersten vorgewählten mittleren Druck in dem Bereich von bis zu 3,45 MPa (500 Pfund pro Quadratzoll) vor dem Reißen gleichmäßig anzusprechen und denselben auszuhalten, wobei die Bögen ein Loch darin umgeben, das für die Aufnahme einer Ösen- und Anschlußstiftvorrichtung, die darin einzuschmelzen ist, bemessen ist; und
eine geprägte Nut (7') in dem geätzten spiegelbildlichen Bogen auf beiden Oberflächen des Deckels des Behälters, um eine zweite Sicherheitsentlüftungsmembran innerhalb der ersten Sicherheitsentlüftungsmembran zu schaffen, die eine gleichmäßige Restmaterialdicke von ungefähr 0,012 bis 0,05 mm (0,0005 bis 0,002 Zoll) hat, welche in der Lage ist, auf einen vorgewählten mittleren Druck in einem Bereich von ungefähr bis zu 3,75 MPa (400 Pfund pro Quadratzoll) vor dem Reißen gleichmäßig anzusprechen und diesen auszuhalten.

## Revendications

1. Procédé de fabrication d'un évent de sécurité dans un couvercle destiné à un récipient totalement étanche, consistant à:
acheminer une ébauche de couvercle pour récipient dans une zone (4, 12, 13) de façonnage d'une première rainure afin de mordancer une première zone rainurée (7) selon une épaisseur de matière restante présélectionnée apte à résister à une première pression moyenne présélectionnée; et,
acheminer cette ébauche de couvercle mordancée dans une zone (15) de façonnage d'une seconde rainure afin de mouler à pression une seconde zone rainure (7') au sein de la première zone rainurée mordancée (7), ayant une épaisseur uniforme de matière restante présélectionnée apte à résister à une seconde pression moyenne présélectionnée inférieure à la limitation de pression moyenne de la première zone rainurée mordancée.

2. Procédé selon la revendication 1, dans lequel la seconde zone rainurée (7') est moulée à pression à l'intervention d'une étape de matriçage.

3. Procédé selon la revendication 1, dans lequel la première zone rainurée (7) est façonnée par une série d'étapes de mordançage comprenant l'impression d'un modèle de réserve présélectionné destiné au masquage, muni d'une zone découverte correspondant à la première zone rainurée (7) et régler le mordançage de cette zone découverte selon une épaisseur de matière restante et selon une largeur uniformes présélectionnées.

4. Procédé selon la revendication 1, dans lequel la première zone rainurée (7) et la seconde zone (7') qui y est rainurée, sont façonnées dans le couvercle pour se trouver du côté externe du récipient.

5. Procédé selon la revendication 1, dans lequel le façonnage de la première zone rainurée (7) comprend le façonnage de rainures spéculaires sur les deux faces de l'ébauche de couvercle.

6. Procédé selon la revendication 1, dans lequel la première zone rainurée (7) et la seconde zone (7') qui y est rainurée sont façonnées dans le couvercle pour se trouver du côté interne du récipient.

7. Procédé selon la revendication 1, dans lequel l'ébauche de couvercle du récipient est constituée d'un alliage à base d'acier ayant une épaisseur comprise dans l'intervalle allant d'approximativement 0,20 à 1,52 mm (0,008 à 0,06 pouce), le façonnage de la première zone rainurée (7) étant réglé pour procurer une épaisseur de matière restante uniforme, comprise dans l'intervalle allant d'approximativement 0,06 à 0,089 mm (0,0025 à 0,0035 pouce) et le façonnage de la seconde zone rainurée (7') étant réglé pour procurer une épaisseur de matière restante uniforme dans la première zone rainurée (7), comprise dans l'intervalle allant d'environ 0,012 à 0,05 mm (0,0005 à 0,002 pouce).

8. Procédé de fabrication d'un évent de sécurité dans un couvercle destiné à un récipient totalement étanche, consistant à:
acheminer une ébauche de couvercle de récipient constitué d'une matière d'alliage à base d'acier ayant une épaisseur comprise dans l'intervalle allant approximativement de 0,20 à 1,52 mm (0,008 à 0,06 pouce) dans une zone (4, 12, 13) de façonnage d'une première rainure, cette zone comprenant une zone intermédiaire (4) d'impression, une zone intermédiaire (12) de mordançage et une zone intermédiaire (1) de rinçage;

imprimer l'ébauche de couvercle de récipient tandis qu'elle se trouve dans cette zone intermédiaire (4) d'impression, avec un modèle de réserve destiné au masquage muni d'une zone de canal découverte, cette zone devant correspondre à une zone de diaphragme à évent de sécurité;

acheminer cette ébauche de couvercle de récipient imprimée masquée à la zone intermédiaire (12) de mordançage;

soumettre cette ébauche de couvercle de récipient tandis qu'elle se trouve dans la zone (12) de mordançage à un procédé de mordançage contrôlé en vue de mordancer la zone de canal découverte, sur les deux surfaces, pour façonner une première zone rainurée (7) et laisser une épaisseur de matière restante uniforme présélectionnée comprise dans l'intervalle allant approximativement de 0,06 à 0,089 mm (0,0025 à 0,0035 pouce) qui sert de premier diaphragme à évent de sécurité disposé dans le couvercle, apte à résister à une première pression moyenne présélectionnée, avant de se rompre;

acheminer ce couvercle rainuré mordancé à travers la zone intermédiaire (13) de rinçage pour éliminer les matières de réserve et de mordançage;

acheminer l'ébauche de couvercle rainurée dans une zone (15) de façonnage d'une seconde rainure;

et matricer cette zone mordancée, sur les deux surfaces du couvercle du récipient en vue de façonner une seconde zone rainurée (7') dans la première zone rainurée (7), en procurant une épaisseur de matière restante uniforme dans la première zone rainurée (7), comprise dans l'intervalle allant d'environ 0,012 à 0,05 mm (0,0005 à 0,002 pouce).

9. Couvercle (17) destiné à un récipient totalement étanche, muni d'une première zone rainurée (7) qui y a été mordancée pour s'étendre en relation d'écartement par rapport à son bord périphérique qui l'entoure, ayant une épaisseur de matière restante présélectionnée pour fournir un premier diaphragme à évent de sécurité apte à résister à une première pression moyenne présélectionnée, avant de se rompre; et, une seconde zone rainurée (7') moulée à pression dans la zone rainurée mordancée (7), ayant une épaisseur de matière restante présélectionnée pour fournir un diaphragme à évent de sécurité apte à résister et à répondre de manière uniforme à une seconde pression moyenne présélectionnée inférieure à la première pression moyenne présélectionnée, avant de se rompre.

10. Couvercle de récipient selon la revendication 9, dans lequel la première zone rainurée (7) est chimiquement mordancée dans le couvercle en relation spéculaire sur les deux surfaces de ce dernier.

11. Couvercle de récipient selon la revendication 9, dans lequel la seconde zone rainurée (7') au sein de la première zone rainurée (7) y est matricée sur les deux surfaces du couvercle.

12. Couvercle de récipient selon la revendication 9, ce couvercle de récipient étant constitué d'un alliage à base d'acier ayant une épaisseur comprise dans l'intervalle allant d'approximativement 0,20 à 1,52 mm (0,008 à 0,06 pouce), le premier diaphragme à évent de sécurité ayant une épaisseur de matière restante uniforme comprise dans l'intervalle allant approximativement 0,06 à 0,089 mm (0,0025 à 0,0035 pouce) et le second diaphragme à évent de sécurité ayant une épaisseur de matière restante uniforme comprise dans l'intervalle allant approximativement de 0,012 à 0,05 mm (0,0095 à 0,002 pouce).

13. Couvercle circulaire pour batterie en alliage à base d'acier 'destiné à un récipient de batterie au lithium totalement étanche, ce couvercle ayant une épaisseur comprise dans l'intervalle allant approximativement de 0,20 à 1,52 mm (0,008 à 0,06 pouce) et ayant des rainures opposées (7) chimiquement mordancées en son sein sous forme d'arcs spéculaires circulaires inférieurs à 360° écartés du bord périphérique du couvercle, pour procurer un premier diaphragme de sécurité ayant une épaisseur de matière restante présélectionnée uniforme comprise dans l'intervalle allant d'approximativement 0,06 à 0,089 mm (0,0025 à 0,0035 pouce) apte à résister et à répondre de manière uniforme à une première pression moyenne présélectionnée allant jusqu'à 3,45 MPa (500 livres par pouce carré), avant de se rompre, ces arcs entourant une ouverture pratiquée dans le couvercle, dimensionnée pour recevoir un assemblage d'œillet et de broche terminale qui doit venir s'y incorporer; et rainure matricée (7') dans l'arc spéculaire mordancé sur les deux surfaces du couvercle du récipient, en vue de procurer un second diaphragme à évent de sécurité au sein du premier diaphragme à évent de sécurité, ayant une épaisseur de matière restante uniforme comprise entre approximativement 0,012 et 0,05 mm (0,0005 et 0,002 pouce) apte à résister et à répondre de manière uniforme à une pression moyenne présélectionnée allant approximativement jusqu'à 2,75 MPa (400 livres par pouce carré), avant de se rompre.